# FASCICULE DE BREVET EUROPEEN

(11) **EP 1 957 182 B1**
(45) Date de publication et mention de la délivrance du brevet: **03.07.2013**
(21) Numéro de dépôt: 06830242.1
(22) Date de dépôt: 30.11.2006
(51) Int. Cl.: B01D 53/18, B01J 19/32

(54) **PROCÉDÉ DE TRAITEMENT D'UN EFFLUENT GAZEUX CHARGÉ EN COMPOSÉS ODORANTS A L'AIDE D'UN MAILLAGE TRIDIMENSIONNEL,**
VERFAHREN ZUR BEHANDLUNG EINES MIT RIECHENDEN VERBINDUNGEN BELADENEN ABGASES UNTER VERWENDUNG EINES DREIDIMENSIONALEN NETZES
PROCESS FOR TREATING A GASEOUS EFFLUENT LOADED WITH ODORANT COMPOUNDS USING A THREE-DIMENSIONAL MESH

(30) Priorité: 02.12.2005 FR 0512273
(43) Date de publication de la demande: 20.08.2008
(73) Titulaire: Veolia Water Solutions & Technologies Support, 94410 Saint-Maurice (FR)
(72) Inventeur: SANCHEZ, Célia, F-35000 Rennes (FR); COUVERT, Annabelle, F-35000 Rennes (FR); RENNER, Christophe, F-93220 Gagny (FR)
(74) Mandataire: Larcher, Dominique
(86) Numéro de dépôt international: PCT/EP2006/069143
(87) Numéro de publication internationale: WO 2007/063104

(56) Documents cités:
- EP-A- 1 050 352
- WO-A-01/28648
- WO-A-01/87448
- DE-C- 576 026
- US-A- 4 678 648
- US-A1- 2005 035 473

## Description

Le domaine de l'invention est celui de la désodorisation d'effluents gazeux. Plus précisément, l'invention concerne une technique de désodorisation d'un effluent gazeux à l'aide d'un réacteur dans lequel transite l'effluent en présence d'une solution de lavage.

Actuellement, l'élimination des composés odorants de l'air se fait classiquement par lavage chimique à basé d'acides, de bases et/ou d'oxydants, dans des colonnes verticales ou horizontales équipées ou non d'un matériau de garnissage.

Si le procédé de traitement a su, jusqu'à présent, aboutir à de bons résultats en termes d'efficacité, il n'en reste pas moins un problème de coût de fonctionnement, et surtout un souci lié à l'emprise au sol que personne n'a réussi à résoudre à l'heure actuelle.

En effet, le temps de contact nécessaire à un traitement efficace avec ce type d'installation (supérieur à la seconde, étant donnée l'aire d'échange interfaciale gaz-liquide générée) a conduit à construire des ouvrages de taille importante, à savoir des tours de plusieurs mètres de haut, impliquant des coûts en matériaux et en génie civil élevés.

Une autre solution a été étudiée en utilisant des mélangeurs statiques par exemple pour l'élimination d'hydrogène sulfuré (Péculier, 1996) et a donné lieu à la réalisation d'unités de traitement des gaz odorant).

Les mélangeurs statiques sont classiquement utilisés pour améliorer les mélanges liquide/liquide ou la dispersion de gaz dans des liquides (phase liquide prépondérante). On les utilise par exemple dans l'industrie chimique (dilution de solvants, émulsion de liquides immiscibles...), l'industrie du pétrole (mélange d'essences d'indices différents, mélange d'additif et de fuel...), l'industrie du papier (blanchiment), l'industrie alimentaire (addition de colorants, d'émulsifiants) ou le traitement des eaux (mélange rapide d'additif de floculation).

Dans le cadre d'une utilisation gaz/liquide, la phase liquide est la plupart du temps la phase majoritaire par rapport à la phase gaz qui est la phase minoritaire (i.e. oxygénation des eaux par injection d'air).

Les principaux avantages des mélangeurs statiques sont les suivants :
- peu d'entretien du fait de l'absence de pièces mécaniques en mouvement ;
- encombrement faible ;
- bonne uniformisation car bon macro et micro-mélange (généralement pas de zone morte) ;
- gamme de débits de travail élevée ;
- gamme de viscosité des fluides large ;
- échange de matière et de chaleur intenses ;
- exploitation aisée.

Toutefois, l'inconvénient majeur de ces contacteurs diphasiques réside dans la forte perte de charge qu'ils génèrent (pouvant être 100 fois plus importante que celle observée dans les colonnes garnies). Cette perte de charge implique de mettre en oeuvre des puissances de ventilation plus élevés, ce qui conduit à des coûts de fonctionnement importants, et rend ces contacteurs incompatibles dans de nombreuses applications industrielles de traitement des gaz.

On connaît notamment un mélangeur statique comprenant des éléments hélicoïdaux avec trois pales. Des dentelures radiales sur les faces du moyeu de chaque élément permettent le réglage de la position qui convient le mieux au régime d'écoulement laminaire, turbulent ou intermédiaire. L'assemblage de sept éléments forme une hélice qui provoque une rotation de 180° du fluide.

On connaît également un mélangeur statique comprenant des éléments hélicoïdaux placés en séquence à 90° chacun divisant le flux à répétition afin d'obtenir un mélange homogène après quelques éléments.

Selon un autre type de mélange statique, des éléments hélicoïdaux divisent le fluide en une série de rotations à 180° successives et alternantes.

Selon encore un autre type de mélange statique, des plaques gaufrées superposées en couches forment des canaux ouverts qui se croisent, l'élément suivant étant disposé à 90° du précédent. Ce garnissage interne comporte des lamelles inclinées et divise l'écoulement en une multitude de petits filets, les recombine et les re-divise, créant ainsi le mélange du fluide.

On connaît la demande WO-A1-01/87448 qui décrit une colonne d'échange de matière ou d'énergie entre deux fluides, et dans laquelle un gaz circule à contre-courant d'une solution de lavage. Cette colonne loge un maillage tridimensionnel constitué de fils ou de fibres permettant de guider les fluides de manière linéaire. On connaît également la demande de brevet EP-A2-1050352 qui concerne une méthode pour fabriquer un garnissage fait d'une structure réticulaire tridimensionnelle qui constitue une structure interne d'un dispositif destiné à exécuter un transfert de matériau, un échange de chaleur ou un mélange entre gaz, liquides ou gaz et liquides, la structure interne étant divisée en une pluralité de chambres ou canaux reliés à un autre. La demande US-A1-200510035473 concerne un dispositif d'échange de matière et/ou d'énergie dans une colonne de lavage présentant de grandes zones verticales d'écoulement permettant d'obtenir des débits maximum de vapeurs ou de gaz. Les vapeurs ou les gaz s'écoulent sans pertes d'impulsion et donc avec une perte de pression minimale, à contre-courant du liquide le long de fils métalliques ou non métalliques ondulés disposés verticalement les uns à côté des autres et formant des bandes de tissu ou de treillis à larges mailles, fabriquées au moyen de métiers à tisser ou à tresser classiques, puis ces vapeurs ou gaz sont échangés avec le liquide.

On connaît, en outre, la demande de brevet WO-A1-01/28648 qui décrit une colonne de lavage dans laquelle un gaz circule à contre courant d'une solution de lavage. Plus précisément, cette demande décrit un ensemble de répartition du liquide à une pluralité de points de fourniture du liquide dans un emballage réactionnel tridimensionnel. La demande de brevet US-A-4,678,648 décrit une technique d'élimination de sulfure d'hydrogène et de dioxyde de carbone contenus dans un gaz en le faisant transiter à co-courant avec une solution d'alkanolamine dans une colonne contenant un maillage tridimensionnel constitué de plaques plissées. La demande de brevet DE-C-576026 décrit une technique de refroidissement d'un gaz consistant à le mettre en contact à contre courant avec de l'eau au sein d'une colonne logeant un maillage tridimensionnel.

Quels que soient les mélangeurs statiques connus, les fortes pertes de charge générées par les organes de mélange et/ou de transfert ont toujours constitué un verrou technologique. De ce fait, peu de chercheurs se sont penchés sur une utilisation industrielle autre que pour le mélange de fluides, et ont encore moins tenté de réduire ces pertes de charges afin d'optimiser leur fonctionnement.

Il est donc apparu nécessaire d'essayer de résoudre ces problèmes de pertes de charge tout en conservant l'intérêt de la compacité du système, ou de trouver une solution nouvelle conservant les avantages des mélangeurs statiques sans en avoir les inconvénients.

L'invention a notamment pour objectif de pallier les inconvénients de l'art antérieur.

Plus précisément, l'invention a pour objectif de proposer une technique de traitement des gaz odorants alliant les avantages des colonnes garnies et des mélangeurs statiques, c'est-à-dire un procédé présentant une faible perte de charge, et un fort rendement d'élimination des composés odorants.

L'invention a également pour objectif de fournir une telle technique qui puisse présenter un faible encombrement comparé aux solutions de l'art antérieur.

L'invention a aussi pour objectif de fournir une telle technique qui permette d'envisager une réduction des coûts de fonctionnement par rapport à ceux occasionnés par les techniques connues.

Un autre objectif de l'invention est de fournir une telle technique qui soit simple de conception et facile à mettre en oeuvre.

Ces objectifs, ainsi que d'autres qui apparaîtront par la suite, sont atteints grâce à l'invention qui a pour objet, un procédé de traitement d'un effluent gazeux chargé en composés odorants selon la revendication 1.

De cette façon, l'invention propose l'utilisation d'une structure plus « aérée » que celle des mélangeurs statiques. L'impact des fluides circulant au travers du maillage entraîne de fortes turbulences. Cependant, il ne provoque pas de fortes pertes de charge du fait d'une faible surface de contact opposée à leur écoulement.

Cette structure permet de diviser les flux en plusieurs courants partiels, et de les re-mélanger ensuite. En changeant les profils de vitesses (divisions et recombinaisons successives de l'écoulement), cette structure permet de redistribuer les flux au sein de l'enveloppe, générant une forte turbulence, un bon mélange et améliorant l'aire d'échange interfaciale.

Cette aire interfaciale est un paramètre clé dans la mesure où elle conditionne le transfert des polluants de la phase gazeuse vers la phase liquide réactive où ils seront éliminés. Les coefficients de transfert sont élevés, la turbulence également, du fait d'un fort mélange.

L'invention permet donc de contourner le verrou technologique que constituent les fortes pertes de charges générées par les mélangeurs statiques.

Le gain sur la perte de charge, par rapport aux systèmes de traitement d'air classiquement utilisés, permet d'utiliser des ventilateurs moins puissants, ce qui entraîne une réduction des coûts de fonctionnement importants ; la consommation énergétique est en effet un poste financier très important sur les unités de désodorisation (de l'ordre de 20 % du coût d'exploitation).

Comparé aux tours de lavage de l'art antérieur, un procédé selon l'invention peut être mis en oeuvre avec une grande compacité, ce qui en fait un procédé utilisable de façon plus souple.

Sur un site industriel possédant plusieurs sources d'émissions de gaz odorants, il peut par exemple être mis en oeuvre sur chaque ouvrage dont il s'agit de traiter les odeurs, évitant ainsi tout un réseau de gaines de ventilation nécessaires au rapatriement de l'air vicié vers une unité de traitement centrale comme les tours de lavage. Le gain en terme de coûts d'équipement est alors sensible grâce à la réduction du métrage de gaines de ventilation nécessaire.

Selon l'invention, ledit maillage tridimensionnel comprend une pluralité de brins montés essentiellement fixes dans ledit réacteur.

Dans ce cas, au moins certains desdits brins sont préférentiellement semi-rigides.

On obtient ainsi un maillage qui présente une souplesse relative qui tend à réduire encore les pertes de charge.

On comprend donc par le terme « essentiellement fixes » que les brins sont montés fixement sur les parois du réacteur, mais qu'ils peuvent légèrement fléchir sous l'effet du flux de gaz et/ou de la solution de lavage.

Selon l'invention, lesdits brins présentent une section s'inscrivant dans un cercle dont le diamètre est compris entre environ 0,5 mm et 4 mm.

Selon l'invention , ledit maillage tridimensionnel présente des mailles dont les côtés présentent une longueur comprise entre environ 1 cm et environ 10 cm, et préférentiellement entre environ 1 cm et environ 3 cm.

Selon un premier mode de réalisation, le procédé selon l'invention est mis en oeuvre dans un réacteur s'étendant selon un axe sensiblement vertical.

Dans ce cas, selon une première variante, ledit effluent et ladite solution de lavage sont injectés dans ledit réacteur selon un flux ascendant.

Selon une deuxième variante, ledit effluent et ladite solution de lavage sont injectés dans ledit réacteur selon un flux descendant.

Selon un deuxième mode de réalisation, le procédé selon l'invention est mis en oeuvre dans un réacteur s'étendant selon un axe sensiblement horizontal.

Préférentiellement, le dispositif selon l'invention est mis en oeuvre dans un dispositif comprenant au moins un dévésiculeur en aval dudit réacteur.

On peut ainsi éliminer les gouttelettes dans le gaz sortant. Selon une solution avantageuse, le procédé comprend une récupération et une réinjection de ladite solution de lavage dans ledit réacteur.

Préférentiellement, le rapport débit massique liquide/débit massique gaz est compris entre 2 et 10.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue schématique d'un dispositif pour la mise en oeuvre d'un procédé selon l'invention ;
- la figure 2 est un graphe des pertes de charges en fonction de la vitesse de gaz, mesurées sur un dispositif pour la mise en oeuvre d'un procédé selon l'invention, sur un mélangeur statique de l'art antérieur et sur une colonne vide ;
- les figures 3 à 5 sont des graphes de relevés de pertes de charges, respectivement sur une colonne vide, sur un mélangeur statique de l'art antérieur et sur un dispositif pour la mise en oeuvre d'un procédé selon l'invention ;
- les figures 6 à 8 sont des graphes de relevés d'aires interefaciales, respectivement sur une colonne vide, sur un mélangeur statique de l'art antérieur et sur un dispositif pour la mise en oeuvre d'un procédé selon l'invention.

Tel qu'indiqué précédemment, le principe de l'invention réside dans le fait d'intégrer à un réacteur dans lequel est susceptible de transiter un effluent gazeux, un contacteur gaz/liquide réticulé et compact sous forme d'un maillage tridimensionnel.

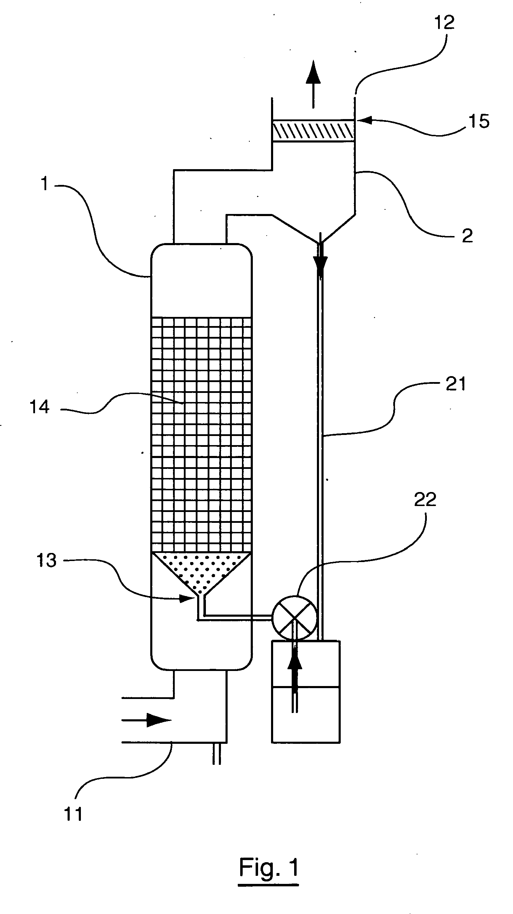

Ce principe est illustré par la figure 1 qui montre un réacteur 1 présentant une arrivée 11 d'un effluent gazeux, une sortie 12 dudit effluent gazeux et des moyens d'injection 13 d'une solution de lavage, le réacteur intégrant un maillage tridimensionnel 14.

De façon connue en soi, les solutions de lavages sont acides, basiques et/ou basiques oxydantes.

Le maillage 14 se présente sous forme d'une structure en métal ou en plastique (ou en tout autre matériau résistant aux liquides de lavages utilisés (acides, bases, oxydants) selon d'autres modes de réalisation envisageables), tridimensionnelle composée de mailles d'1 cm à 10 cm de côté. L'épaisseur des brins constituant le matériau de contact est comprise entre 0,5 et 4 mm de diamètre.

Pour des débits de gaz faible (par exemple inférieurs à 5 000 m³/h), les mailles présenteront une taille comprise entre 1 cm et 3 cm de côté, tandis que pour des débits plus importants, la taille des mailles peut être comprise entre 3 cm et 10 cm de côté.

De plus, les brins constituant le maillage sont conçus pour être semi-rigides et sont montés fixement sur les parois du réacteur 1.

Selon le présent mode de réalisation, le réacteur 1 prend la forme d'une colonne verticale, et l'effluent gazeux et la solution sont injectés à co-courant selon un flux ascendant (des flux descendants et/ou à contre-courant pouvant toutefois être envisagés selon d'autres modes de réalisation).

Sans sortir du cadre de l'invention, il est également envisageable de concevoir un réacteur s'étendant selon un axe horizontal.

Le dispositif comprend en outre, en amont de la sortie 12 de l'effluent gazeux traité, un dévésiculeur 15 assurant l'élimination d'éventuelles gouttelettes de solution de lavage présentes dans les effluents du gaz sortant.

La solution de lavage est ainsi récupérée et re-circulée plusieurs fois avant d'être remplacée, totalement ou en partie, par une solution de lavage neuve.

Les gouttelettes séparées du gaz sortant sont récupérées dans une trémie 2 qui communique avec un conduit 21 de réinjection de la solution de lavage récupérée, celui-ci étant couplé à la pompe 22 d'alimentation du réacteur en solution de lavage.

Selon un mode de réalisation particulier, une installation de traitement d'effluents gazeux peut comprendre plusieurs dispositifs selon l'invention montés en série, ces dispositifs fonctionnant dans une position verticale à flux ascendants, verticale à flux descendants, horizontale, ou sous forme d'un ensemble de réacteurs installés en série selon une combinaison de ces différentes positions.

Le procédé mis en oeuvre avec un dispositif (ou plusieurs) tel que celui qui vient d'être décrit consiste donc à faire transiter un effluent gazeux en présence d'une solution de lavage dans un réacteur intégrant un maillage tridimensionnel.

Dans un tel procédé, la vitesse du gaz peut varier de 1 à 30 m/s ce qui est considérablement plus élevé que sur les colonnes garnies selon l'art antérieur (15 fois plus important) et les mélangeurs statiques (de 2 à 3 fois plus dans leurs conditions normales d'utilisation). Le rapport débit massique liquide/débit massique gaz varie entre 0,5 et 15 (préférentiellement entre 2 et 10). De préférence, la vitesse du gaz varie entre 10 et 20 m/s.

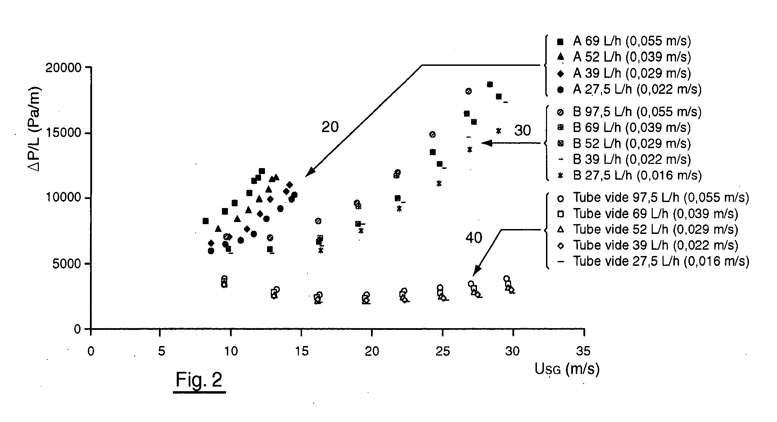

Tel que le montre le graphe de la figure 2, la perte de charge observée dans un dispositif selon l'invention est particulièrement faible par rapport à celle rencontrée avec un mélange statique selon l'invention.

Ce graphe montre en effet trois groupes de relevés :
- un groupe de relevés 20 réalisés avec un mélangeur statique classique (A) ;
- un groupe de relevés 30 réalisés avec un dispositif selon l'invention (B);
- un groupe de relevés 40 réalisés avec un tube (ou colonne) vide (c'est-à-dire en l'absence de garnissage structuré à l'intérieur du tube).

La comparaison des groupes 20 et 30 montrent clairement que le dispositif selon l'invention est avantageux en termes de perte de charge.

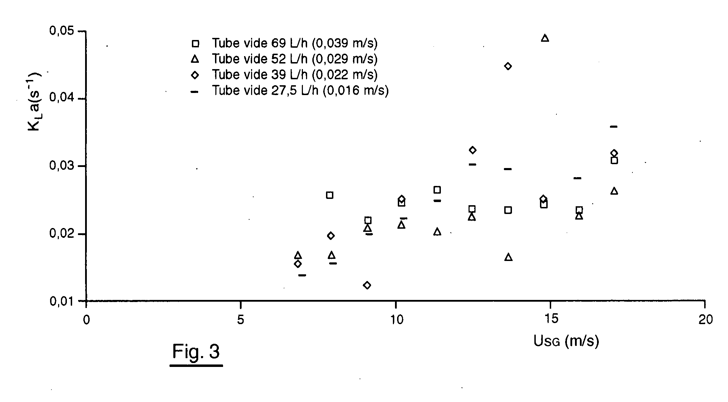

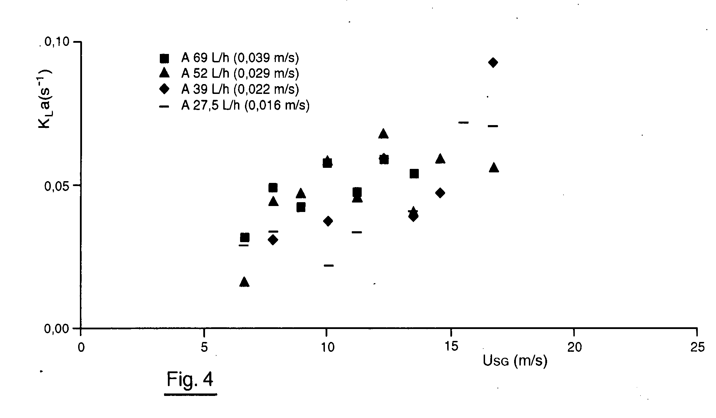

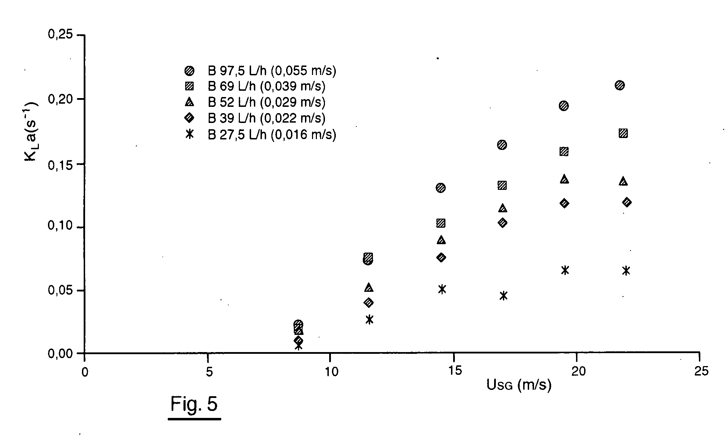

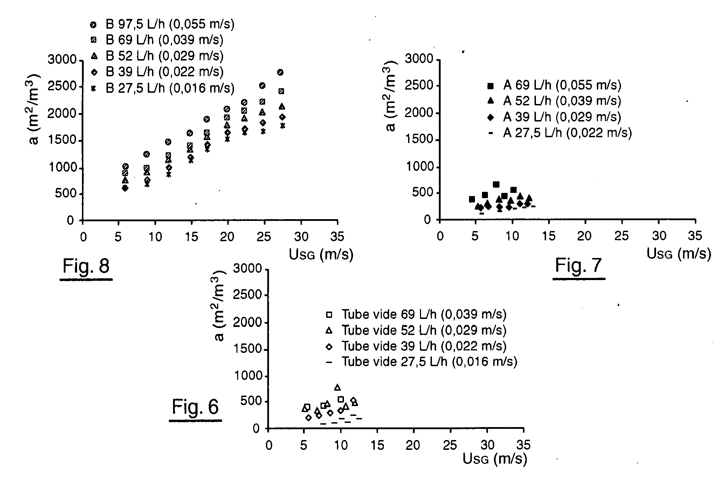

Les graphes des figures 3 à 8 permettent de comparer la perte de charge et l'aire interfaciale (soit respectivement augmentation du K_{L}a et de a) en fonction de la vitesse de gaz avec un dispositif selon l'invention (figures 5 et 8), une colonne vide (figures 3 et 6) et un mélangeur statique classique (figure 4 et 7).

Les figures 5 et 8 font apparaître clairement que le dispositif selon l'invention est aussi particulièrement avantageux en termes d'aire interfaciale.

## Revendications

1. Procédé de traitement d'un effluent gazeux chargé en composés odorants comprenant une étape de transit dudit effluent avec une vitesse comprise entre 10 m/s et 20 m/s dans un réacteur (1) en présence d'une solution de lavage, ledit effluent et ladite solution de lavage étant injectés à co-courant dans ledit réacteur,
**caractérisé en ce que** ladite étape de transit est réalisée en faisant passer ledit effluent au travers d'un maillage tridimensionnel (14) intégré audit réacteur (1), ledit maillage tridimensionnel étant de nature à favoriser les aires d'échange interfaciales entre ledit effluent et ladite solution de lavage, ledit maillage comprenant une pluralité de brins montés essentiellement fixes dans ledit réacteur, et présentant une section s'inscrivant dans un cercle dont le diamètre est compris entre 0,5 mm et 4 mm et présentant des mailles dont les côtés présentent une longueur comprise entre 1 cm et 10 cm, , le rapport entre le débit massique liquide et le débit massique gaz au sein dudit réacteur étant compris entre 0,5 et 15.

2. Procédé de traitement d'un effluent gazeux selon la revendication 1, **caractérisé en ce que** le rapport entre le débit massique liquide et le débit massique gaz au sein dudit réacteur étant compris entre 2 et 10.

3. Procédé selon la revendication 2, **caractérisé en ce que** au moins certains desdits brins sont semi-rigides.

4. Procédé selon l'une quelconque des revendications 1 à 3, **caractérisé en ce qu'**il est mis en oeuvre dans un réacteur s'étendant selon un axe sensiblement vertical.

5. Procédé selon la revendication 4, **caractérisé en ce que** ledit effluent et ladite solution de lavage sont injectés dans ledit réacteur selon un flux ascendant.

6. Procédé selon la revendication 4, **caractérisé en ce que** ledit effluent et ladite solution de lavage sont injectés dans ledit réacteur selon un flux descendant.

7. Procédé selon l'une quelconque des revendications 1 à 3 **caractérisé en ce qu'**il est mis en oeuvre dans un réacteur s'étendant selon un axe sensiblement horizontal.

8. Procédé selon l'une quelconque des revendications 1 à 7, **caractérisé en ce qu'**il est mis en oeuvre dans un dispositif comprenant au moins un dévisiculeur en aval dudit réacteur.

9. Procédé selon l'une quelconque des revendications 1 à 8, **caractérisé en ce qu'**il comprend une récupération et une réinjection de ladite solution de lavage dans ledit réacteur.

## Patentansprüche

1. Verfahren zur Behandlung eines mit riechenden Verbindungen beladenen gashaltigen Ablaufs, wobei das Verfahren einen Schritt des Beförderns des Ablaufs mit einer Geschwindigkeit zwischen 10 m/s und 20 m/s in einen Reaktor (1) in Gegenwart einer Waschlösung, wobei der Ablauf und die Waschlösung im Gleichstrom in den Reaktor eingespritzt werden,
**dadurch gekennzeichnet, dass** der Schritt des Beförderns durchgeführt wird, indem der Ablauf durch eine dreidimensionale Maschenstruktur (14) geleitet wird, die in den Reaktor (1) integriert ist, wobei die dreidimensionale Maschenstruktur so beschaffen ist, dass die Grenzflächenaustauschbereiche zwischen dem Ablauf und der Waschlösung begünstigt werden, wobei die Maschenstruktur mehrere Drähte umfasst, die im Wesentlichen fest an dem Reaktor montiert sind und die einen Querschnitt aufweisen, der sich in einen Kreis einfügt, dessen Durchmesser zwischen 0,5 mm und 4 mm liegt, und Maschen aufweist, dessen Seiten eine Länge aufweisen, die zwischen 1 cm und 10 cm liegt, wobei das Verhältnis zwischen dem Flüssigkeitsmassenstrom und dem Gasmassenstrom im Inneren des Reaktors zwischen 0,5 und 15 liegt.

2. Verfahren zur Behandlung eines gashaltigen Ablaufs nach Anspruch 1, **dadurch gekennzeichnet, dass** das Verhältnis zwischen dem Flüssigkeitsmassenstrom und dem Gasmassenstrom im Inneren des Reaktors zwischen 2 und 10 liegt.

3. Verfahren nach Anspruch 2, **dadurch gekennzeichnet, dass** mindestens bestimmte der Drähte halbstarr sind.

4. Verfahren nach einem der Ansprüche 1 bis 3, **dadurch gekennzeichnet, dass** es in einem Reaktor durchgeführt wird, der sich gemäß einer im Wesentlichen vertikalen Achse erstreckt.

5. Verfahren nach Anspruch 4, **dadurch gekennzeichnet, dass** der Ablauf und die Waschlösung gemäß einer aufsteigenden Strömung in den Reaktor eingespritzt werden.

6. Verfahren nach Anspruch 4, **dadurch gekennzeichnet, dass** der Ablauf und die Waschlösung gemäß einer absteigenden Strömung in den Reaktor eingespritzt werden.

7. Verfahren nach einem der Ansprüche 1 bis 3, **dadurch gekennzeichnet, dass** es in einem Reaktor durchgeführt wird, der sich gemäß einer im Wesentlichen horizontalen Achse erstreckt.

8. Verfahren nach einem der Ansprüche 1 bis 7, **dadurch gekennzeichnet, dass** es in einer Vorrichtung durchgeführt wird, die mindestens einen Tropfenabscheider stromabwärts des Reaktors umfasst.

9. Verfahren nach einem der Ansprüche 1 bis 8, **dadurch gekennzeichnet, dass** es eine Rückgewinnung und eine erneute Einspritzung der Waschlösung in den Reaktor umfasst.

## Claims

1. Process for treating a gaseous effluent loaded with odorant compounds, comprising a step of transit of the said effluent with a speed of between 10 m/s and 20 m/s in a reactor (1) in the presence of a washing solution, the said effluent and the said washing solution being injected as a co-current into the said reactor,
**characterised in that** the said step of transit is carried out by making the said effluent pass through a three-dimensional mesh (14) which is integrated in the said reactor (1), the said three-dimensional mesh being of a nature such as to assist the areas of interface exchange between the said effluent and the said washing solution, the said mesh comprising a plurality of fibres which are mounted in a substantially fixed manner in the said reactor, and having a cross-section which is contained in a circle, the diameter of which is between 0.5 mm and 4 mm, and having mesh sizes, the sides of which have a length between 1 cm and 10 cm, the ratio between the liquid mass flow and the gas mass flow within the said reactor being between 0.5 and 15.

2. Process for treating a gaseous effluent according to claim 1, **characterised in that** the ratio between the liquid mass flow and the gas mass flow within the said reactor is between 2 and 10.

3. Process according to claim 2, **characterised in that** at least some of the said fibres are semi-rigid.

4. Process according to any one of claims 1 to 3, **characterised in that** it is implemented in a reactor which extends according to a substantially vertical axis.

5. Process according to claim 4, **characterised in that** the said effluent and the said washing solution are injected in the said reactor according to an ascending flow.

6. Process according to claim 4, **characterised in that** the said effluent and the said washing solution are injected in the said reactor according to a descending flow.

7. Process according to any one of claims 1 to 3, **characterised in that** it is implemented in a reactor which extends according to a substantially horizontal axis.

8. Process according to any one of claims 1 to 7, **characterised in that** it is implemented in a device comprising at least one demister downstream from the said reactor.

9. Process according to any one of claims 1 to 8, **characterised in that** it comprises recuperation and reinjection of the said washing solution in the said reactor.
